# EUROPEAN PATENT SPECIFICATION

(11) **EP 3 291 092 B1**
(45) Date of publication and mention of the grant of the patent: **08.01.2020**
(21) Application number: 15890263.5
(22) Date of filing: 29.04.2015
(51) Int. Cl.: G06F 11/14

(54) **DATA RECOVERY METHOD, DEVICE AND TERMINAL**
DATENWIEDERHERSTELLUNGSVERFAHREN, VORRICHTUNG UND ENDGERÄT
PROCÉDÉ DE RÉCUPÉRATION DE DONNÉES, DISPOSITIF ET TERMINAL

(43) Date of publication of application: 07.03.2018
(73) Proprietor: Huawei Technologies Co. Ltd., Shenzhen, Guangdong 518129 (CN)
(72) Inventor: LI, Zhigang, Shenzhen Guangdong 518129 (CN)
(74) Representative: Pfenning, Meinig & Partner mbB
(86) International application number: PCT/CN2015/077811
(87) International publication number: WO 2016/172883

(56) References cited:
- WO-A1-01/09722
- CN-A- 1 746 857
- CN-A- 101 196 839
- CN-A- 103 150 223
- CN-A- 103 383 656
- US-A1- 2007 226 548
- US-A1- 2013 047 031

## Description

### TECHNICAL FIELD

Embodiments of the present invention relate to a terminal storage technology, and specifically, to a data restoration method and apparatus, and a terminal.

### BACKGROUND

Currently, an eMMC (Embedded Multi Media Card, embedded multimedia card) is widely used as a main storage medium of a mobile terminal. An intrinsic physical characteristic of a memory in the eMMC may result in generation of a bad block during use, and once the bad block occurs, data originally stored in the block is lost.

An existing eMMC controller generally uses ECC (Error Checking and Correction, error checking and correction) to resolve a bad block problem of a memory in a fault-tolerant manner, but an abnormal data problem still cannot be fully resolved. In addition, there is neither a corresponding monitor mechanism nor an extra protection measure for a read-only area of the memory. If an error occurs in data in the read-only area, anomaly may occur in a mobile terminal that uses the memory, and further, a system cannot be started.
WO 01/09722 A1 discloses an operating system stored in a reprogrammable memory. Said memory may store a primary operating system and a recovery operating system. In a booting process, the recovery operation system may automatically obtain a new operating system to replace a corrupted or outdated operating system.
US 2013/0047031 A1 discloses a system and method for recovering a boot image from a secure location. Therein, hardware instructions initiate a sequence of boot cycles to launch a computer operating system on a computer-enabled device. During the boot cycles, multiple levels of boot code are verified and a determination is made whether each level is usable by the device. If a level of boot code is determined to be unusable, a secure copy of the boot code is loaded from a secure read-only location to repair the unusable code to launch the computer operating system.

US 2007/0226548 A1 discloses a booting system for booting from a non-XIP memory utilizing a boot engine that does not have ECC capabilities during booting. The booting system includes a non-XIP memory for storing a boot loader code and a plurality of operating system (OS) images, wherein the OS images in the none-XIP memory correspond to a same source image; a XIP memory for storing a shattered boot loader code and OS images; a central processing unit (CPU) for executing the OS images stored in the XIP memory; a code shattering module for performing error detection checking on the OS images in the non-XIP memory and shattering the boot loader code and OS images to the XIP memory; and a non-XIP interface for enabling the boot engine to access the non-XIP memory.

### SUMMARY

Embodiments of the present invention provide a data restoration method and apparatus, and a terminal, so that the terminal may automatically restore a system when an error occurs in data in a read-only area of a memory.

According to a first aspect, a memory data restoration method is provided, where the method is used to restore data in a memory, the memory is included in a terminal, and the method includes:
when the terminal runs or loads a first operating system, monitoring whether an error occurs in original data stored in a read-only area of the memory;
loading a second operating system from the memory when it is determined that an error occurs in the original data, where the second operating system provides at least a system restoration function; and
when the terminal runs the second operating system, obtaining an original data file corresponding to the original data, and restoring the original data to the read-only area of the memory according to the original data file.

In a first possible implementation manner of the first aspect, the monitoring whether an error occurs in original data stored in a read-only area of the memory specifically includes:
checking each block of data in the original data stored in the read-only area of the memory, to obtain a first check value corresponding to each block of data in a one-to-one manner, where the read-only area includes at least one partition, and the at least one partition includes at least one block of data; and
determining whether a first check value of a first block of data is the same as an original check value of the first block of data, where the first block of data is any block of data in the original data; and
if the first check value is different from the original check value, an error occurs in the original data.

With reference to the first possible implementation manner of the first aspect, in a second possible implementation manner, when the first check value is different from the original check value, the method further includes:
recording information about the first block of data.

With reference to any one of the first aspect or the foregoing possible implementation manners of the first aspect, the obtaining an original data file corresponding to the original data specifically includes:
sending, by the terminal, an obtaining request to an external device, where the obtaining request is used for obtaining the original data file corresponding to the original data; and
receiving, by the terminal, the original data file sent by the external device.

With reference to the third possible implementation manner of the first aspect, the obtaining request includes a model of the terminal and a version of the first operating system; and
the original data file is a mirror of the original data.

With reference to the third possible implementation manner of the first aspect, the obtaining request includes a model of the terminal, a version of the first operating system, and block information of original data in which an error occurs; and
the original data file is a mirror of the original data corresponding to the block information.

With reference to any one of the first aspect or the foregoing possible implementation manners of the first aspect, in a sixth possible implementation manner, the read-only area includes system files of at least two second operating systems; and
the loading a second operating system specifically includes: loading a normal second operating system in the at least two second operating systems.

According to a second aspect, a data restoration apparatus is provided, where the apparatus is configured to restore data in a memory, the memory is included in a terminal, and the apparatus includes:
a monitor unit, configured to: when the terminal runs or loads a first operating system, monitor whether an error occurs in original data stored in a read-only area of the memory;
a loading unit, configured to: load a second operating system from the memory when it is determined that an error occurs in the original data, where the second operating system provides at least a system restoration function; and
a restoration unit, configured to: when the terminal runs the second operating system, obtain an original data file corresponding to the original data, and restore the original data to the read-only area of the memory according to the original data file.

In a first possible implementation manner of the second aspect, the monitor unit includes: a check unit and a determining unit;
the check unit is configured to: when the terminal runs or loads the first operating system, check each block of data in the original data stored in the read-only area of the memory, to obtain a first check value corresponding to each block of data in a one-to-one manner, where the read-only area includes at least one partition, and the at least one partition includes at least one block of data; and
the determining unit is configured to: determine whether a first check value of a first block of data is the same as an original check value of the first block of data, where the first block of data is any block of data in the original data; and if the first check value is different from the original check value, an error occurs in the original data.

With reference to the first possible implementation manner of the second aspect, in a second possible implementation manner, the apparatus further includes:
a record unit, configured to: record information about the first block of data when the determining unit determines that the first check value is different from the original check value.

With reference to any one of the second aspect or the foregoing possible implementation manners of the second aspect, the obtaining an original data file corresponding to the original data specifically includes:
sending an obtaining request to an external device, where the obtaining request is used for obtaining the original data file corresponding to the original data; and
receiving the original data file sent by the external device.

With reference to the third possible implementation manner of the second aspect, the obtaining request includes a model of the terminal and a version of the first operating system; and
the original data file is a mirror of the original data.

With reference to the third possible implementation manner of the second aspect, the obtaining request includes a model of the terminal, a version of the first operating system, and block information of original data in which an error occurs; and
the original data file is a mirror of the original data corresponding to the block information.

With reference to any one of the second aspect or the foregoing possible implementation manners of the second aspect, in a sixth possible implementation manner, the read-only area includes system files of at least two second operating systems; and
the loading a second operating system specifically includes: loading a normal second operating system in the at least two second operating systems.

According to a third aspect, a terminal is provided and includes: a processor, a memory, and a communications interface, where
the memory is configured to store program code;
the processor, the memory, and the communications interface communicate with each other by using a bus; and
the processor is configured to read data and the program code that are stored in the memory, so as to execute the following operations:
when the terminal runs or loads a first operating system, monitoring whether an error occurs in original data stored in a read-only area of the memory;
loading a second operating system from the memory when it is determined that an error occurs in the original data, where the second operating system provides at least a system restoration function; and
when the terminal runs the second operating system, obtaining an original data file corresponding to the original data, and restoring the original data to the read-only area of the memory according to the original data file.

In a first possible implementation manner of the third aspect, the monitoring whether an error occurs in original data stored in a read-only area of the memory specifically includes:
checking each block of data in the original data stored in the read-only area of the memory, to obtain a first check value corresponding to each block of data in a one-to-one manner, where the read-only area includes at least one partition, and the at least one partition includes at least one block of data; and
determining whether a first check value of a first block of data is the same as an original check value of the first block of data, where the first block of data is any block of data in the original data; and
if the first check value is different from the original check value, an error occurs in the original data.

With reference to the first possible implementation manner of the third aspect, in a second possible implementation manner, when determining that the first check value is different from the original check value, the processor further executes the following operations:
recording information about the first block of data.

With reference to any one of the third aspect or the foregoing possible implementation manners of the third aspect, in a third possible implementation manner, the obtaining an original data file corresponding to the original data specifically includes:
sending an obtaining request to an external device, where the obtaining request is used for obtaining the original data file corresponding to the original data; and
receiving the original data file sent by the external device.

With reference to the third possible implementation manner of the third aspect, in a fourth possible implementation manner, the obtaining request includes a model of the terminal and a version of the first operating system; and
the original data file is a mirror of the original data.

With reference to the third possible implementation manner of the third aspect, in a fifth possible implementation manner, the obtaining request includes a model of the terminal, a version of the first operating system, and block information of original data in which an error occurs; and
the original data file is a mirror of the original data corresponding to the block information.

With reference to any one of the third aspect or the foregoing possible implementation manners of the third aspect, in a sixth possible implementation manner, the read-only area includes system files of at least two second operating systems; and
when executing the operation of loading the second operating system, the processor specifically executes the following:
loading a normal second operating system in the at least two second operating systems.

In the embodiments of the present invention, original data stored in a read-only area of a memory is monitored; when it is determined that an error occurs in the original data, a second operating system is loaded from a terminal; an original data file stored in the read-only area is obtained when the second operating system is run; and the original data is restored to the read-only area of the memory according to the original data file. Therefore, the terminal may automatically restore a system when an error occurs in data in the read-only area of the memory. This reduces terminal maintenance costs.

The invention is defined by the features laid down in the independent claims 1, 4, 7, 8 and 9. Further enhancements are provided by the dependent claims.

### BRIEF DESCRIPTION OF DRAWINGS

FIG. 1 is a flowchart of a data restoration method according to an embodiment of the present invention;
FIG. 2 is a flowchart of another data restoration method according to an embodiment of the present invention;
FIG. 3 is a schematic diagram of a data restoration apparatus according to an embodiment of the present invention;
FIG. 4 is a schematic diagram of another data restoration apparatus according to an embodiment of the present invention; and
FIG. 5 is a schematic diagram of a terminal according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

Ordinal numbers such as "first" and "second", if mentioned in the embodiments of the present invention, are only used for distinguishing, unless the ordinal numbers definitely represent a sequence according to the context.

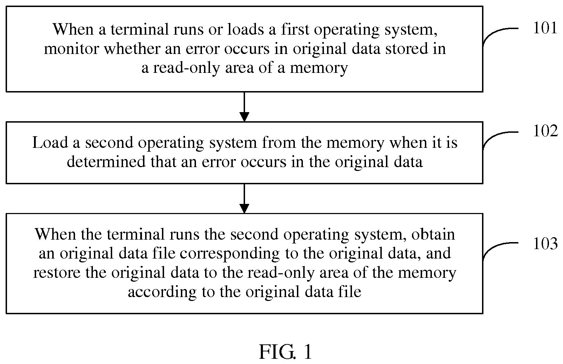

FIG. 1 is a flowchart of a data restoration method according to an embodiment of the present invention. As shown in FIG. 1, the method includes the following steps.

Step 101. When a terminal runs or loads a first operating system, monitor whether an error occurs in original data stored in a read-only area of a memory.

A terminal memory generally includes a readable area and a read-only area according to a read attribute of data. Data in the readable area can be read and written. Data in the read-only area is read-only in a normal situation, that is, cannot be overwritten, and this area is generally a program area and an area in which data cannot be changed. If an error or an anomaly occurs in data in the read-only area, the terminal probably cannot normally load an operating system, or a running operating system crashes and cannot be started.

In this embodiment of the present invention, the original data stored in the read-only area of the memory may be monitored when the terminal runs the first operating system; or the original data stored in the read-only area of the memory may be monitored when the terminal loads the first operating system before delivery or during initialization or switching on the terminal. For example, the original data stored in the read-only area of the memory may be monitored by starting a background process, so as to find in a timely manner an error or an anomaly in data stored in the read-only area.

Loading an operating system refers to a process of enabling an operating system. When loading is completed, the operating system is normally started, and the terminal runs the loaded operating system.

The first operating system is a general-purpose operating system. In this embodiment of the present invention, the first operating system may be, such as, an Android system of the Google company, an iOS system developed by the Apple company, a Windows operating system developed by the Microsoft company, a Symbian (Symbian) system, or a BlackBerry (BlackBerry) OS system.

Step 102. Load a second operating system from the memory when it is determined that an error occurs in the original data, where the second operating system provides a system restoration function.

In the first operating system, a user can normally use the terminal. In step 101 in this embodiment of the present invention, when running or loading the first operating system, the terminal monitors the original data stored in the read-only area of the memory. When it is determined that an error occurs in the original data stored in the read-only area, that is, the first operating system may not normally run or may crash, the second operating system is loaded from the terminal.

It should be noted that the second operating system may be an operating system the same as the first operating system; or may be any one of the foregoing general-purpose operating systems except the first operating system; or may be a minimum system different from the first operating system.

The minimum system is a system that can provide a user with a restoration screen while occupying as less read-only area space as possible. The minimum system has at least a function of normally starting or restarting a CPU, a function of reading a RAM, or an external connection function.

It should be noted that the minimum system has the function of normally starting or restarting a CPU, to ensure that the terminal can enable the minimum system when monitoring that an error occurs in the original data in read-only area of the memory. The minimum system has the function of reading a RAM, to ensure that data can be read from the memory when the minimum system is run. The minimum system has the external connection function, to ensure a connection between the terminal and an external device to obtain required data.

Optionally, the minimum system further includes a function of backing up data. Based on the function, the terminal may back up data or give up backing up data in the minimum system. For example, backup data may be backed up to an external memory, such as an SD card.

No matter whether the second operating system is a general-purpose operating system or a minimum system, when it is determined that an error occurs in the original data, the terminal can be rebooted and load the second operating system from the memory, so that the terminal runs the second operating system and provides a restoration function at a restoration screen.

The restoration screen includes at least connection and restoration options. Optionally, when the minimum system includes the function of backing up data, the restoration screen further has an option of backing up data.

Further, in this embodiment of the present invention, system files of at least two second operating systems may be included in the read-only area, and the loading a second operating system specifically includes: loading a normal second operating system in the at least two second operating systems. Namely, data of the second operating system is backed up in two partitions. This may avoid a case in which the terminal cannot enable the second operating system because an error occurs in data of the second operating system.

It should be noted that the system file of the second operating systems is also located in the read-only area of the memory. In this embodiment of the present invention, whether an error occurs in data of the second operating system may be monitored. For a monitoring method, refer to the monitoring method in step 101. When an error is found in data of the second operating system, the terminal may mark the system, so that when loading the second operating system, the terminal may choose to load a second operating system in which no error occurs.

Step 103. When the terminal runs the second operating system, obtain an original data file corresponding to the original data, and restore the original data to the read-only area of the memory according to the original data file.

When loading the second operating system is complete, the terminal runs the second operating system. The terminal may obtain a mirror of the original data stored in the read-only area, and write the obtained mirror of the original data into the read-only area of the memory by covering erroneous data in the read-only area; or delete erroneous data from the read-only area, and then write the obtained mirror of the original data into the read-only area of the memory, so as to restore data in the read-only area to the memory.

In this embodiment of the present invention, original data stored in a read-only area of a memory is monitored; when it is determined that an error occurs in the original data, a second operating system is loaded from a terminal; an original data file stored in the read-only area is obtained when the second operating system is run; and the original data is restored to the read-only area of the memory according to the original data file. Therefore, the terminal may automatically restore a system when an error occurs in data in the read-only area of the memory. This reduces terminal maintenance costs and improves maintenance efficiency.

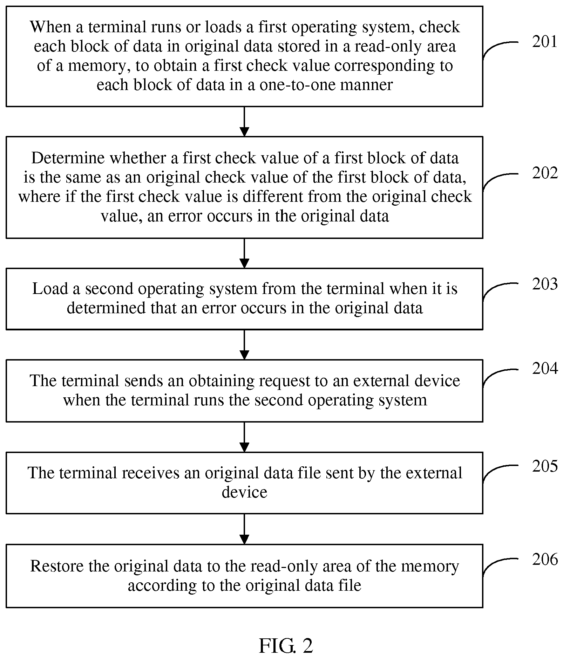

FIG. 2 is a flowchart of another data restoration method according to an embodiment of the present invention. On the basis of the embodiment shown in FIG. 1, as shown in FIG. 2, the method includes the following steps.

Step 201. When the terminal runs or loads the first operating system, check each block of data in the original data stored in the read-only area of the memory, to obtain a first check value corresponding to each block of data in a one-to-one manner, where the read-only area includes at least one partition, and the at least one partition includes at least one block of data.

The read-only area of the terminal memory may be divided into one or more partitions, each partition includes one or more blocks, and a block of data may be stored in the block. The terminal may check each block of data in the read-only area of the memory during starting or initializing the terminal or after starting or initializing the terminal, to obtain and save an original check value of each block of data.

Afterward, when the terminal runs or loads the first operating system, each block of data in the original data in the read-only area may be successively checked at a fixed time interval in a manner such as starting a process, to obtain the first check value corresponding to each block of data, so that the original data stored in the read-only area is monitored.

When obtaining the first check value of each block of data, blocks of data in all partitions may be sequentially checked, that is, all blocks of data are successively checked; or blocks of data in all partitions may be checked at the same time, that is, all of the partitions are checked at the same time, and all blocks in a same partition are successively checked; or check may be performed in any combination of the foregoing two manners.

Further, in this embodiment of the present invention, the original data is continuously and cyclically checked before a data error is found in the read-only area.

Further, a data check manner used in this embodiment of the present invention may be, such as, a CRC (Cyclic Redundancy Check, cyclic redundancy check), an MD5 (Message Digest Algorithm 5, message digest algorithm 5) check, or an SHA1 (Secure Hash Algorithm, secure hash algorithm) check.

Step 202. Determine whether a first check value of a first block of data is the same as an original check value of the first block of data, where the first block of data is any block of data in the original data; and if the first check value is different from the original check value, an error occurs in the original data.

In a process of checking each block of data in the read-only area, whether the first check value of the first block of data is the same as the original check value of this block of data is compared, so as to determine whether an error occurs in the first block of data.

If the original check value of the first block of data is the same as the first check value, it indicates that no change occurs in the data, that is, no error occurs. When an error is not found, each block of data is continuously checked according to the foregoing step.

When the first check value of the first block of data is different from the original check value, it is considered that a change occurs in the data in the read-only area, that is, it is determined that an error occurs in the original data stored in the read-only area.

Further, in this embodiment of the present invention, information about the first block of data may be recorded when it is determined that the first check value of the first block of data is different from the original check value. The information about the first block of data is block information, and the block information may be location information of the first block, or the like.

Step 203. Load a second operating system from the terminal when it is determined that an error occurs in the original data, where the second operating system provides at least a system restoration function.

Step 203 is the same as step 102 in the embodiment shown in FIG. 1, and details are not described herein again.

Step 204. When the terminal runs the second operating system, the terminal sends an obtaining request to an external device, where the obtaining request is used for obtaining the original data file corresponding to the original data.

The obtaining request may be a request for obtaining all the original data in the read-only area, or may be a request for obtaining some original data that is in the read-only area and in which an error occurs.

For example, when the obtaining request includes a model of the terminal and a version of the first operating system, data requested for obtaining is a mirror of all the original data that is stored in the read-only area and that is corresponding to the model of the terminal and the version.

When the obtaining request includes a model of the terminal, a version of the first operating system, and block information of original data in which an error occurs, data requested for obtaining is a mirror of the erroneous block of original data that is stored in the read-only area and that is corresponding to the model of the terminal, the version of the first operating system, and the block information of the original data in which the error occurs. For example, when an error occurs in the first block of data, block information of the first block of data in which the error occurs is recorded, that is, location information of a block in which the first block of data locates.

Step 205. The terminal receives the original data file sent by the external device. In this embodiment of the present invention, a method for obtaining, by the terminal from the external device, a mirror of the original data stored in the read-only area may be downloading a stored mirror of the original data from a server by using Wi-Fi; downloading a stored mirror of the original data from a terminal, such as a PC (Personal Computer, personal computer), by using a data cable; or the like.

Step 206. The terminal restores the original data to the read-only area of the memory according to the original data file.

In this embodiment of the present invention, each block of data in a read-only area of a memory is checked, so as to find a data error in the read-only area in a timely manner; and when a data error is found, a restoration system is automatically run to restore original data, so that a terminal can automatically restore a system when an error occurs in data in the read-only area of the memory. This reduces terminal maintenance costs and improves maintenance efficiency.

The embodiments of the present invention further provide a memory data restoration apparatus implementing the steps and the methods in the foregoing method embodiments.

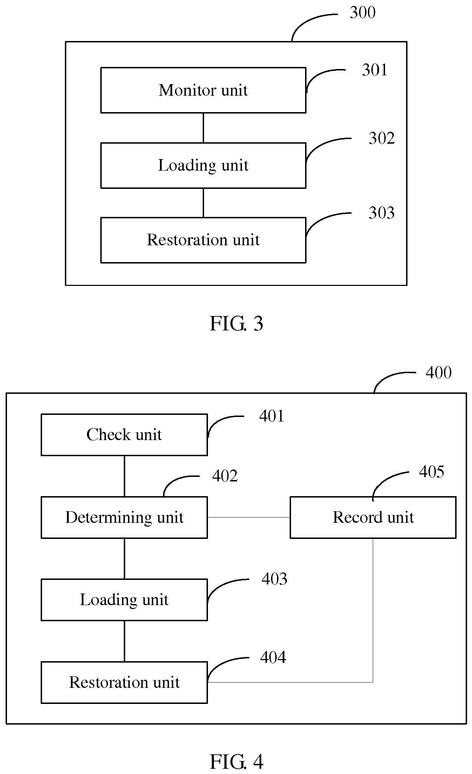

FIG. 3 is a schematic diagram of a data restoration apparatus according to an embodiment of the present invention. As shown in FIG. 3, the data restoration apparatus 300 includes a monitor unit 301, a loading unit 302, and a restoration unit 303.

The monitor unit 301 is configured to: when a terminal runs or loads a first operating system, monitor whether an error occurs in original data stored in a read-only area of a memory.

The loading unit 302 is configured to: load a second operating system from the memory when it is determined that an error occurs in the original data, where the second operating system provides a system restoration function.

It should be noted that optionally, the read-only area in this embodiment of the present invention includes system files of at least two second operating systems; and a normal second operating system in the at least two second operating systems is loaded.

The restoration unit 303 is configured to: when the terminal runs the second operating system, obtain an original data file corresponding to the original data, and restore the original data to the read-only area of the memory according to the original data file.

In this embodiment of the present invention, original data stored in a read-only area of a memory is monitored; when it is determined that an error occurs in the original data, a second operating system is loaded from a terminal; an original data file stored in the read-only area is obtained when the second operating system is run; and the original data is restored to the read-only area of the memory according to the original data file. Therefore, the terminal may automatically restore a system when an error occurs in data in the read-only area of the memory. This reduces terminal maintenance costs and improves maintenance efficiency.

The data restoration apparatus provided in this embodiment of the present invention is configured to implement the methods in the embodiments shown in FIG. 1 and FIG. 2. For a specific operating principle and work process of the data restoration apparatus and a technical effect produced by the data restoration apparatus, refer to the embodiments shown in FIG. 1 and FIG. 2. Details are not described herein again.

FIG. 4 is a schematic diagram of another data restoration apparatus according to an embodiment of the present invention. On the basis of the embodiment shown in FIG. 3, as shown in FIG. 4, the data restoration apparatus 400 includes: a check unit 401, a determining unit 402, a loading unit 403, a restoration unit 404, and a record unit 405.

The check unit 401 is configured to: when the terminal runs or loads the first operating system, check each block of data in the original data stored in the read-only area of the memory, to obtain a first check value corresponding to each block of data in a one-to-one manner, where the read-only area includes at least one partition, and the at least one partition includes at least one block of data.

The determining unit 402 is configured to: determine whether a first check value of a first block of data is the same as an original check value of the first block of data, where the first block of data is any block of data in the original data; and if the first check value is different from the original check value, an error occurs in the original data.

The loading unit 403 is configured to: load a second operating system from the memory when it is determined that an error occurs in the original data, where the second operating system provides at least a system restoration function.

The restoration unit 404 is configured to: when the terminal runs the second operating system, send an obtaining request to an external device, where the obtaining request is used for obtaining the original data file corresponding to the original data; and receive the original data file sent by the external device.

It should be noted that when the obtaining request includes a model of the terminal and a version of the first operating system, the original data file is a mirror of the original data.

Optionally, this embodiment of the present invention may further include the record unit 405, configured to: record information about the first block of data when the determining unit 402 determines that the first check value is different from the original check value.

When the obtaining request includes a model of the terminal, a version of the first operating system, and block information of original data in which an error occurs, the original data file is a mirror of the original data corresponding to the block information.

In this embodiment of the present invention, data in a read-only area of a memory is monitored, so as to find an error of read-only data in a timely manner; and when a data error is found, a restoration system is automatically run to restore original data, so that a terminal can automatically restore a system when an error occurs in data in the read-only area of the memory. This reduces terminal maintenance costs, and improves maintenance efficiency.

The data restoration apparatus provided in this embodiment of the present invention is configured to implement the methods in the embodiments shown in FIG. 1 and FIG. 2. For a specific operating principle and work process of the data restoration apparatus and a technical effect produced by the data restoration apparatus, refer to the embodiments shown in FIG. 1 and FIG. 2. Details are not described herein again.

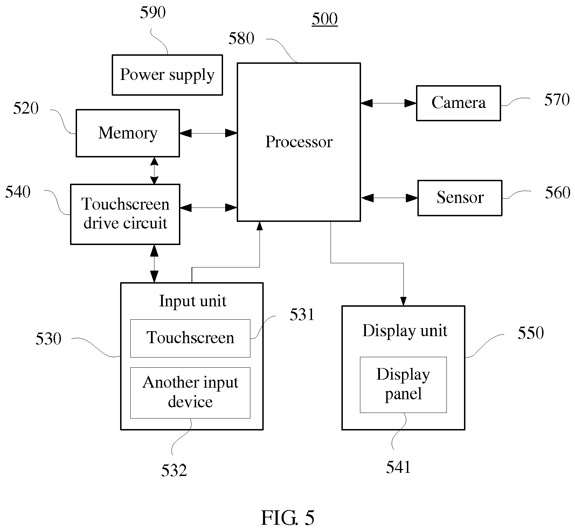

FIG. 5 is a schematic diagram of a terminal according to an embodiment of the present invention.

The terminal may be a mobile phone, a tablet computer, a notebook computer, a UMPC (Ultra-mobile Personal Computer, ultra-mobile personal computer), a netbook, a PDA (Personal Digital Assistant, personal digital assistant), or the like. In this embodiment of the present invention, a mobile phone is used as an example for describing the terminal. FIG. 5 shows a block diagram of a partial structure of a mobile phone 500 related to this embodiment of the present invention.

As shown in FIG. 5, the mobile phone 500 includes components such as a memory 520, an input unit 530, a touchscreen drive circuit 540, a display unit 550, a sensor 560, a camera 570, a processor 580, and a power supply 590. A person skilled in the art may understand that the structure of the mobile phone shown in FIG. 5 imposes no limitation on the mobile phone, and instead, the mobile phone may include components more or fewer than those shown in the figure, a combination of some components, or different component arrangements.

The following describes each component of the mobile phone 500 in detail with reference to FIG. 5.

The memory 520 may be configured to store a software program and a module, and the processor 580 runs the software program and the module that are stored in the memory 520, so as to execute various functional applications of the mobile phone 500 and perform data processing. The memory 520 may primarily include a program storage area and a data storage area. The program storage area may store an operating system, an application program required by at least one function (such as an audio play function or a video play function), and the like. The data storage area may store data (such as audio data, video data, or a phonebook) created according to use of the mobile phone 500, and the like. In addition, the memory 520 may include a high-speed random access memory, and may further include a nonvolatile memory, such as at least one magnetic disk storage, a flash memory, or another volatile solid-state storage.

The input unit 530 may be configured to receive entered digit or character information, and generate key signal input related to user setting and function control of the mobile phone 500. Specifically, the input unit 530 may include a touchscreen 531 and another input device 532. The touchscreen 531 is also referred to as a touch panel and may collect a touch operation (such as an operation performed by a user on the touchscreen 531 or near the touchscreen 531 by using any proper object or accessory, such as a finger or a stylus) performed by a user on or near the touchscreen, and drive a corresponding connection apparatus according to a preset program. Optionally, the touchscreen 531 may include two parts: a touch detection apparatus and a touch controller. The touch detection apparatus detects a touch position of the user, detects a signal brought by a touch operation, and transfers the signal to the touch controller. The touch controller receives touch information from the touch detection apparatus, converts the touch information into coordinates of a touch point, then sends the coordinates of the touch point to the processor 580, and can receive and execute a command sent by the processor 580. In addition, the touchscreen 531 may be implemented by using multiple types such as a resistive type, a capacitive type, infrared, and a surface acoustic wave. In addition to the touchscreen 531, the input unit 530 may further include another input device 532. Specifically, the another input device 532 may include but is not limited to one or more of a physical keyboard, a function key (such as a volume control key or a power switch key), a trackball, a mouse, a joystick, or the like.

The touchscreen drive circuit 540 may be configured to obtain a location of a touch and control point triggered in the touchscreen and a quantity of touch and control points. For example, in a capacitive touchscreen, the touchscreen drive circuit may calculate a capacitance change in each touch and control point of the touchscreen, to obtain the location of the triggered touch and control point and the quantity of triggered touch and control points. Optionally, the touchscreen drive circuit 540 may be included in the touch detection apparatus or the touch controller.

The display unit 550 may be configured to display information entered by the user or information provided for the user, and various menus of the mobile phone 500. The display unit 550 may include a display panel 541, and optionally, and the display panel 541 may be configured in a form of an LCD (Liquid Crystal Display, liquid crystal display), an OLED (Organic Light-Emitting Diode, organic light-emitting diode), or the like. Further, the touchscreen 531 may cover the display panel 541. When the touchscreen 531 detects a touch operation on or near the touchscreen 531, the touchscreen 531 transfers the touch operation to the processor 580 to determine a touch event type, and then the processor 580 provides corresponding visual output on the display panel 541 according to the touch event type. In FIG. 5, the touchscreen 531 and the display panel 541 are used as two separate components to implement an input and output function of the mobile phone 500. However, in some embodiments, the touchscreen 531 and the display panel 541 may be integrated to implement the input and output function of the mobile phone 500.

The mobile phone 500 may further include at least one type of sensor 560, such as a light sensor, a motion sensor, an intensity sensor, a fingerprint sensor, and another sensor. Specifically, the light sensor may include an ambient light sensor and a proximity sensor. The ambient light sensor may adjust luminance of the display panel 541 according to brightness of ambient light. The proximity sensor may detect whether an object is close to or touch the mobile phone, and may close the display panel 541 and/or backlight when the mobile phone 500 approaches an ear. As a type of motion sensor, an accelerometer sensor may detect a value of acceleration in each direction (generally, three axes), may detect a value and a direction of gravity in a static mode, and may be used for an application that identifies a phone gesture (such as screen orientation, related games, and magnetometer gesture calibration), a function related to vibration identification (such as a pedometer and a stroke), and the like. The intensity sensor may detect intensity of an object in contact with the mobile phone. The fingerprint sensor is configured to collect a fingerprint entered by the user. For the mobile phone 500, a gyroscope, a barometer, a hygrometer, a thermometer, an infrared sensor, and other sensors may be further configured, and details are not described herein.

The camera 570 is a built-in camera of the mobile phone, and may be a front-facing camera, or may be a rear-facing camera.

The processor 580 is a control center of the mobile phone 500, and uses various interfaces and lines to connect all parts of the entire mobile phone. By running or executing the software program and/or the module that are stored in the memory 520 and invoking data stored in the memory 520, the processor 580 executes various functions of the mobile phone 500 and processes data, so as to monitor the entire mobile phone. Optionally, the processor 580 may include one or more processing units. Preferably, an application processor and a modem processor may be integrated into the processor 580. The application processor mainly processes an operating system, a user interface, an application program, or the like. The modem processor mainly processes radio communications. It may be understood that the foregoing modem processor may not be integrated into the processor 580.

The mobile phone 500 further includes the power supply 590 (such as a battery) that supplies power to each component. Preferably, the power supply may be logically connected to the processor 580 by using a power management system, so as to implement functions such as charging/discharging management, and power consumption management by using the power management system.

Although not shown, the mobile phone 500 may further include an RF (radio frequency, radio frequency) circuit, an audio frequency circuit, a Wi-Fi (Wireless Fidelity, Wireless Fidelity) module, a Bluetooth module, and the like. Details are not described herein.

In this embodiment of the present invention, the processor 580 is configured to read the program code and the data that are stored in the memory 520, so as to execute the following operations:
when the terminal runs or loads a first operating system, monitoring whether an error occurs in original data stored in a read-only area of the memory;
loading a second operating system from the memory when it is determined that an error occurs in the original data, where the second operating system provides at least a system restoration function; and
when the terminal runs the second operating system, obtaining an original data file corresponding to the original data, and restoring the original data to the read-only area of the memory according to the original data file.

Optionally, the read-only area includes system files of at least two second operating systems; and when executing the operation of loading the second operating system, the processor 580 loads a normal second operating system in the at least two second operating systems.

Further, the obtaining an original data file corresponding to the original data, and restoring the original data to the memory according to the original data file specifically includes:
sending, to an external device, an obtaining request used for obtaining the original data file corresponding to the original data; and
receiving the original data file sent by the external device, and restoring the original data to the read-only area of the memory according to the original data file.

It should be noted that when the obtaining request includes a model of the terminal and a version of the first operating system, the original data file is a mirror of the original data.

Optionally, when determining that a first check value is different from an original check value, the processor 580 further executes the following operations:
recording information about a first block of data.

It should be noted that, when the obtaining request includes a model of the terminal, a version of the first operating system, and block information of original data in which an error occurs, the original data file is a mirror of the original data corresponding to the block information.

Further, the monitoring whether an error occurs in original data stored in a read-only area of the memory specifically includes:
checking each block of data in the original data stored in the read-only area of the memory, to obtain a first check value corresponding to each block of data in a one-to-one manner, where the read-only area includes at least one partition, and the at least one partition includes at least one block of data; and
determining whether a first check value of a first block of data is the same as an original check value of the first block of data, where the first block of data is any block of data in the original data; and
if the first check value is different from the original check value, an error occurs in the original data.

In this embodiment of the present invention, original data stored in a read-only area of a memory is monitored; when it is determined that an error occurs in the original data, a second operating system is loaded from a terminal; an original data file stored in the read-only area is obtained when the second operating system is run; and the original data is restored to the read-only area of the memory according to the original data file. Therefore, the terminal may automatically restore a system when an error occurs in data in the read-only area of the memory. This reduces terminal maintenance costs and improves maintenance efficiency.

The terminal provided in this embodiment of the present invention is configured to implement the methods in the embodiments shown in FIG. 1 and FIG. 2. For a specific operating principle and work process of the terminal and a technical effect produced by the terminal, refer to the embodiments shown in FIG. 1 and FIG. 2. Details are not described herein again.

With descriptions of the foregoing embodiments, a person skilled in the art may clearly understand that the present invention may be implemented by hardware, firmware or a combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a computer. The following provides an example but does not impose a limitation: The computer-readable medium may include a RAM, a ROM, an EEPROM, a CD-ROM, or another optical disc storage or a disk storage medium, or another magnetic storage device, or any other medium that can carry or store expected program code in a form of an instruction or a data structure and can be accessed by a computer. In addition, any connection may be appropriately defined as a computer-readable medium. For example, if software is transmitted from a website, a server or another remote source by using a coaxial cable, an optical fiber/cable, a twisted pair, a digital subscriber line (DSL) or wireless technologies such as infrared ray, radio and microwave, the coaxial cable, optical fiber/cable, twisted pair, DSL or wireless technologies such as infrared ray, radio and microwave are included in a definition of a medium to which they belong. For example, a disk (Disk) and disc (disc) used by the present invention includes a compact disc (CD), a laser disc, an optical disc, a digital versatile disc (DVD), a floppy disk and a Blu-ray disc, where the disk generally copies data by a magnetic means, and the disc copies data optically by a laser means. The foregoing combination should also be included in the protection scope of the computer-readable medium.

In conclusion, what is described above is merely example embodiments of the technical solutions of the present invention, but is not intended to limit the protection scope of the present invention.

## Claims

1. A data restoration method, wherein the method is used to restore data in a memory (520), the memory (520) is comprised in a terminal (500), and the method comprises:
when the terminal (500) runs or loads a first operating system, monitoring whether an error occurs in original data which relates to the first operating system and which is stored in a read-only area of the memory (520);
loading a second operating system from the memory (520) when it is determined that an error occurs in the original data, wherein the second operating system provides at least a system restoration function; and
when the terminal (500) runs the second operating system, obtaining an original data file corresponding to the original data, and restoring the original data to the read-only area of the memory (520) according to the original data file,
wherein the obtaining an original data file corresponding to the original data specifically comprises:
sending, by the terminal (500), an obtaining request to an external device, wherein the obtaining request is used for obtaining the original data file corresponding to the original data; and
receiving, by the terminal (500), the original data file sent by the external device, **characterized in that**
the obtaining request comprises a model of the terminal (500), a version of the first operating system, and block information of original data in which an error occurs; and
the original data file is a mirror of the original data corresponding to the block information.

2. The method according to claim 1, wherein the monitoring whether an error occurs in original data stored in a read-only area of the memory (520) specifically comprises:
checking each block of data in the original data stored in the read-only area of the memory, to obtain a first check value corresponding to each block of data in a one-to-one manner, wherein the read-only area comprises at least one partition, and the at least one partition comprises at least one block of data; and
determining whether a first check value of a first block of data is the same as an original check value of the first block of data, wherein the first block of data is any block of data in the original data; and
if the first check value is different from the original check value, an error occurs in the original data.

3. The method according to claim 2, wherein when the first check value is different from the original check value, the method further comprises:
recording information about the first block of data.

4. A data restoration apparatus (300, 400), wherein the apparatus (300, 400) is configured to restore data in a memory (520), the memory (520) is comprised in a terminal (500), and the apparatus (300, 400) comprises:
a monitor unit (301), configured to: when the terminal (500) runs or loads a first operating system, monitor whether an error occurs in original data which relates to the first operating system and which is stored in a read-only area of the memory (520);
a loading unit (302, 403), configured to: load a second operating system from the memory (520) when it is determined that an error occurs in the original data, wherein the second operating system provides at least a system restoration function; and
a restoration unit (303, 404), configured to: when the terminal (500) runs the second operating system, obtain an original data file corresponding to the original data, and restore the original data to the read-only area of the memory (520) according to the original data file, wherein the obtaining an original data file corresponding to the original data specifically comprises:
sending an obtaining request to an external device, wherein the obtaining request is used for obtaining the original data file corresponding to the original data; and
receiving the original data file sent by the external device,
**characterized in that**
the obtaining request comprises a model of the terminal (500), a version of the first operating system, and block information of original data in which an error occurs; and
the original data file is a mirror of the original data corresponding to the block information.

5. The apparatus (300, 400) according to claim 4, wherein the monitor unit (301) comprises: a check unit (401) and a determining unit (402);
the check unit (401) is configured to: when the terminal (500) runs or loads the first operating system, check each block of data in the original data stored in the read-only area of the memory (520), to obtain a first check value corresponding to each block of data in a one-to-one manner, wherein the read-only area comprises at least one partition, and the at least one partition comprises at least one block of data; and
the determining unit (402) is configured to: determine whether a first check value of a first block of data is the same as an original check value of the first block of data, wherein the first block of data is any block of data in the original data; and if the first check value is different from the original check value, an error occurs in the original data.

6. The apparatus (300, 400) according to any one of claims 4 to 5, wherein
the read-only area comprises system files of at least two second operating systems; and
the loading a second operating system specifically comprises: loading a normal second operating system in the at least two second operating systems.

7. A terminal (500), comprising: a processor (580), a memory (520), and a communications interface, wherein
the memory (520) is configured to store program code;
the processor (580), the memory (520), and the communications interface communicate with each other by using a bus; and
the processor (580) is configured to read data and the program code that are stored in the memory (520), so as to execute any of the method of the claims 1 to 3.

8. A computer readable storage medium, comprising instructions which, when executed by a computer, cause the computer to carry out any one of the method of claims 1 to 3.

9. A computer program adapted to perform any one of the method of claims 1 to 3.

## Patentansprüche

1. Datenwiederherstellungsverfahren, wobei das Verfahren verwendet wird, um Daten in einem Speicher (520) wiederherzustellen, der Speicher (520) in einem Endgerät (500) umfasst ist und das Verfahren Folgendes umfasst:
wenn auf dem Endgerät (500) ein erstes Betriebssystem läuft oder geladen wird, Überwachen, ob in Originaldaten, die das erste Betriebssystem betreffen und die in einem Nur-Lesen-Bereich des Speichers (520) gespeichert sind, ein Fehler auftritt;
Laden eines zweiten Betriebssystems aus dem Speicher (520), wenn bestimmt wird, dass in den Originaldaten ein Fehler aufgetreten ist, wobei das zweite Betriebssystem mindestens eine Systemwiederherstellungsfunktion bereitstellt; und
wenn das zweite Betriebssystem auf dem Endgerät (500) läuft, Erhalten einer Originaldatendatei und Wiederherstellen der Originaldaten im Nur-Lesen-Bereich des Speichers (520) gemäß der Originaldatendatei,
wobei das Erhalten einer Originaldatendatei, die den Originaldaten entspricht, speziell Folgendes umfasst:
Senden einer Erhaltungsanforderung durch das Endgerät (500) an eine externe Vorrichtung, wobei die Erhaltungsanforderung zum Erhalten der Originaldatendatei, die den Originaldaten entspricht, verwendet wird; und
Empfangen der Originaldatendatei, die von der externen Vorrichtung gesendet wurde, durch das Endgerät (500),
**dadurch gekennzeichnet, dass**
die Erhaltungsanforderung ein Modell des Endgeräts (500), eine Version des ersten Betriebssystems und Blockinformationen von Originaldaten, in denen ein Fehler aufgetreten ist, umfasst und
die Originaldatendatei ein Spiegel der Originaldaten, die den Blockinformationen entsprechen, ist.

2. Verfahren nach Anspruch 1, wobei das Überwachen, ob in Originaldaten, die in einem Nur-Lesen-Bereich des Speichers (520) gespeichert sind, ein Fehler aufgetreten ist, speziell Folgendes umfasst:
Prüfen jedes Datenblocks in den Originaldaten, die im Nur-Lesen-Bereich des Speichers gespeichert sind, um einen ersten Prüfwert zu erhalten, der jedem Datenblock in einer Eins-zu-Eins-Weise entspricht, wobei der Nur-Lesen-Bereich mindestens eine Partition umfasst und die mindestens eine Partition mindestens einen Datenblock umfasst; und
Bestimmen, ob ein erster Prüfwert eines ersten Datenblocks derselbe ist wie ein Originalprüfwert des ersten Datenblocks, wobei der erste Datenblock ein beliebiger Datenblock in den Originaldaten ist; und
wenn sich der erste Prüfwert vom Originalprüfwert unterscheidet, ein Fehler in den Originaldaten aufgetreten ist.

3. Verfahren nach Anspruch 2, wobei, wenn sich der erste Prüfwert vom Originalprüfwert unterscheidet, das Verfahren ferner Folgendes umfasst:
Aufzeichnen von Informationen über den ersten Datenblock.

4. Datenwiederherstellungseinrichtung (300, 400), wobei die Einrichtung (300, 400) dazu ausgelegt ist, Daten in einem Speicher (520) wiederherzustellen, der Speicher (520) in einem Endgerät (500) umfasst ist und die Einrichtung (300, 400) Folgendes umfasst:
eine Überwachungseinheit (301), die zu Folgendem ausgelegt ist: wenn auf dem Endgerät (500) ein erstes Betriebssystem läuft oder geladen wird, Überwachen, ob in Originaldaten, die das erste Betriebssystem betreffen und die in einem Nur-Lesen-Bereich des Speichers (520) gespeichert sind, ein Fehler auftritt;
eine Ladeeinheit (302, 403), die zu Folgendem ausgelegt ist: Laden eines zweiten Betriebssystems aus dem Speicher (520), wenn bestimmt wird, dass in den Originaldaten ein Fehler aufgetreten ist, wobei das zweite Betriebssystem mindestens eine Systemwiederherstellungsfunktion bereitstellt; und
eine Wiederherstellungseinheit (303, 404), die zu Folgendem ausgelegt ist: wenn das zweite Betriebssystem auf dem Endgerät (500) läuft, Erhalten einer Originaldatendatei und Wiederherstellen der Originaldaten im Nur-Lesen-Bereich des Speichers (520) gemäß der Originaldatendatei, wobei das Erhalten einer Originaldatendatei, die den Originaldaten entspricht, speziell Folgendes umfasst:
Senden einer Erhaltungsanforderung an eine externe Vorrichtung, wobei die Erhaltungsanforderung zum Erhalten der Originaldatendatei, die den Originaldaten entspricht, verwendet wird; und
Empfangen der Originaldatendatei, die von der externen Vorrichtung gesendet wurde,
**dadurch gekennzeichnet, dass**
die Erhaltungsanforderung ein Modell des Endgeräts (500), eine Version des ersten Betriebssystems und Blockinformationen von Originaldaten, in denen ein Fehler aufgetreten ist, umfasst und
die Originaldatendatei ein Spiegel der Originaldaten, die den Blockinformationen entsprechen, ist.

5. Einrichtung (300, 400) nach Anspruch 4, wobei die Überwachungseinheit (301) Folgendes umfasst: eine Prüfeinheit (401) und eine Bestimmungseinheit (402);
die Prüfeinheit (401) ist zu Folgendem ausgelegt: wenn auf dem Endgerät (500) das erste Betriebssystem läuft oder geladen wird, Prüfen jedes Datenblocks in den Originaldaten, die im Nur-Lesen-Bereich des Speichers (520) gespeichert sind, um einen ersten Prüfwert zu erhalten, der jedem Datenblock in einer Eins-zu-Eins-Weise entspricht, wobei der Nur-Lesen-Bereich mindestens eine Partition umfasst und die mindestens eine Partition mindestens einen Datenblock umfasst; und
die Bestimmungseinheit (402) ist zu Folgendem ausgelegt: Bestimmen, ob ein erster Prüfwert eines ersten Datenblocks derselbe ist wie ein Originalprüfwert des ersten Datenblocks, wobei der erste Datenblock ein beliebiger Datenblock in den Originaldaten ist; und wenn sich der erste Prüfwert vom Originalprüfwert unterscheidet, ein Fehler in den Originaldaten aufgetreten ist.

6. Einrichtung (300, 400) nach einem der Ansprüche 4 bis 5, wobei
der Nur-Lesen-Bereich Systemdateien von mindestens zwei zweiten Betriebssystemen umfasst und
das Laden eines zweiten Betriebssystems speziell Folgendes umfasst: Laden eines normalen zweiten Betriebssystems in den mindestens zwei zweiten Betriebssystemen.

7. Endgerät (500), das Folgendes umfasst: einen Prozessor (580), einen Speicher (520) und eine Kommunikationsschnittstelle, wobei
der Speicher (520) dazu ausgelegt ist, einen Programmcode zu speichern;
der Prozessor (580), der Speicher (520) und die Kommunikationsschnittstelle unter Verwendung eines Busses miteinander kommunizieren und
der Prozessor (580) dazu ausgelegt ist, Daten und den Programmcode, die im Speicher (520) gespeichert sind, zu lesen, um eines der Verfahren der Ansprüche 1 bis 3 auszuführen.

8. Computerlesbares Speichermedium, das Anweisungen umfasst, die, wenn sie von einem Computer ausgeführt werden, den Computer veranlassen, eines der Verfahren nach den Ansprüchen 1 bis 3 umzusetzen.

9. Computerprogramm, das angepasst ist, eines der Verfahren der Ansprüche 1 bis 3 durchzuführen.

## Revendications

1. Procédé de restauration de données, le procédé étant utilisé pour restaurer des données dans une mémoire (520), la mémoire (520) étant comprise dans un terminal (500), et le procédé consistant à :
quand le terminal (500) exécute ou charge un premier système d'exploitation, surveiller si une erreur survient dans des données d'origine qui se rapportent au premier système d'exploitation et qui sont stockées dans une zone en lecture seule de la mémoire (520) ;
charger un second système d'exploitation depuis la mémoire (520) quand il est déterminé qu'une erreur survient dans les données d'origine, le second système d'exploitation fournissant au moins une fonction de restauration de système ; et
quand le terminal (500) exécute le second système d'exploitation, obtenir un fichier de données d'origine correspondant aux données d'origine, et restaurer les données d'origine dans la zone en lecture seule de la mémoire (520) selon le fichier de données d'origine,
l'obtention d'un fichier de données d'origine correspondant aux données d'origine consistant spécifiquement à :
envoyer, par le terminal (500), une demande d'obtention à un dispositif externe, la demande d'obtention étant utilisée pour obtenir le fichier de données d'origine correspondant aux données d'origine ; et
recevoir, par le terminal (500), le fichier de données d'origine envoyé par le dispositif externe,
le procédé étant **caractérisé en ce que** :
la demande d'obtention comprend un modèle du terminal (500), une version du premier système d'exploitation et une information en bloc de données d'origine où une erreur survient ; et
le fichier de données d'origine est un miroir des données d'origine correspondant à l'information en bloc.

2. Procédé selon la revendication 1, dans lequel la surveillance de si une erreur survient dans des données d'origine stockées dans une zone en lecture seule de la mémoire (520) consiste spécifiquement à :
vérifier chaque bloc de données dans les données d'origine stockées dans la zone en lecture seule de la mémoire, afin d'obtenir une première valeur de vérification correspondant à chaque bloc de données selon une correspondance un à un, la zone en lecture seule comprenant au moins une partition, et l'au moins une partition comprenant au moins un bloc de données ; et
déterminer si une première valeur de vérification d'un premier bloc de données est la même qu'une valeur de vérification d'origine du premier bloc de données, le premier bloc de données étant un bloc quelconque de données dans les données d'origine ; et
si la première valeur de vérification est différente de la valeur de vérification d'origine, une erreur survient dans les données d'origine.

3. Procédé selon la revendication 2, le procédé consistant en outre, quand la première valeur de vérification est différente de la valeur de vérification d'origine, à :
enregistrer une information sur le premier bloc de données.

4. Appareil de restauration de données (300, 400), l'appareil (300, 400) étant configuré pour restaurer des données dans une mémoire (520), la mémoire (520) étant comprise dans un terminal (500), et l'appareil (300, 400) comprenant :
une unité de surveillance (301), configurée pour : quand le terminal (500) exécute ou charge un premier système d'exploitation, surveiller si une erreur survient dans des données d'origine qui se rapportent au premier système d'exploitation et qui sont stockées dans une zone en lecture seule de la mémoire (520) ;
une unité de chargement (302, 403), configurée pour : charger un second système d'exploitation depuis la mémoire (520) quand il est déterminé qu'une erreur survient dans les données d'origine, le second système d'exploitation fournissant au moins une fonction de restauration de système ; et
une unité de restauration (303, 404), configurée pour: quand le terminal (500) exécute le second système d'exploitation, obtenir un fichier de données d'origine correspondant aux données d'origine, et restaurer les données d'origine dans la zone en lecture seule de la mémoire (520) selon le fichier de données d'origine, l'obtention d'un fichier de données d'origine correspondant aux données d'origine consistant à :
envoyer une demande d'obtention à un dispositif externe, la demande d'obtention étant utilisée pour obtenir le fichier de données d'origine correspondant aux données d'origine ; et
recevoir le fichier de données d'origine envoyé par le dispositif externe,
l'appareil étant **caractérisé en ce que** :
la demande d'obtention comprend un modèle du terminal (500), une version du premier système d'exploitation et une information en bloc de données d'origine où une erreur survient ; et
le fichier de données d'origine est un miroir des données d'origine correspondant à l'information en bloc.

5. Appareil (300, 400) selon la revendication 4, dans lequel l'unité de surveillance (301) comprend : une unité de vérification (401) et une unité de détermination (402) ; l'unité de vérification (401) étant configurée pour : quand le terminal (500) exécute ou charge le premier système d'exploitation, vérifier chaque bloc de données dans les données d'origine stockées dans la zone en lecture seule de la mémoire (520), afin d'obtenir une première valeur de vérification correspondant à chaque bloc de données selon une correspondance un à un, la zone en lecture seule comprenant au moins une partition, et l'au moins une partition comprenant au moins un bloc de données ; et
l'unité de détermination (402) étant configurée pour : déterminer si une première valeur de vérification d'un premier bloc de données est la même qu'une valeur de vérification d'origine du premier bloc de données, le premier bloc de données étant un bloc quelconque de données dans les données d'origine ; et si la première valeur de vérification est différente de la valeur de vérification d'origine, une erreur survient dans les données d'origine.

6. Appareil (300, 400) selon l'une quelconque des revendications 4 et 5, dans lequel :
la zone en lecture seule comprend des fichiers de système d'au moins deux seconds systèmes d'exploitation ; et
le chargement d'un second système d'exploitation consiste spécifiquement à : charger un second système d'exploitation normal parmi les au moins deux seconds systèmes d'exploitation.

7. Terminal (500), comprenant : un processeur (580), une mémoire (520) et une interface de communication,
la mémoire (520) étant configurée pour stocker un code de programme ;
le processeur (580), la mémoire (520) et l'interface de communication communiquant les uns avec les autres au moyen d'un bus ; et
le processeur (580) étant configuré pour lire des données et le code de programme qui sont stockés dans la mémoire (520), de manière à exécuter le procédé selon l'une quelconque des revendications 1 à 3.

8. Support de stockage lisible par ordinateur comprenant des instructions qui, lorsqu'elles sont exécutées par un ordinateur, amènent l'ordinateur à réaliser le procédé selon l'une quelconque des revendications 1 à 3.

9. Programme informatique conçu pour effectuer le procédé selon l'une quelconque des revendications 1 à 3.
